# EUROPEAN PATENT APPLICATION

(11) **EP 2 202 253 A2**
(43) Date of publication of application: **30.06.2010**
(21) Application number: 09180809.7
(22) Date of filing: 28.12.2009
(51) Int. Cl.: C08F 212/08, C08F 212/10, C08L 29/04

(54) **Vinyl acetate/neoalkanoic acid vinyl ester copolymers and uses thereof**

(30) Priority: 29.12.2008 US 203751 P
(71) Applicant: Celanese Emulsions GmbH, 61476 Kronberg/Ts. (DE)
(72) Inventor: McLennan, Alistair John, 61462, Koenigstein (DE); Zeimentz, Peter M., 50667 Köln (DE); Laborda, Steve, 65719, Hofheim am Taunus (DE)
(74) Representative: von Kreisler Selting Werner

(57) **Abstract**

A polymer composition comprising a copolymer obtainable by reacting 1-99 pphwm, preferably 10-90 pphwm of vinyl acetate; 40-8 pphwm of at least one vinyl ester ofneoalkanoic acid and at least one additional component selected from the group comprising: (i) 40-1 pphwm of at least one α-olefin; (ii) 10-0.1 pphwm of at least one functional monomer; (iii) 40-1 pphwm of at least one ester of ethylenically unsaturated carboxylic acids. The compositions are especially useful in or as binders for fibrous substrates, such as woven or nonwoven products including textiles, apparel in general, papers, scrim, engineered fabrics, glass or other mineral fibers, roofing or flooring materials.

## Description

### Claim for Priority

This application is based on United States Provisional Application Serial No. 61/203,751 of the same title, filed December 29, 2008. The priority of United States Provisional Application Serial No. 61/203,751 is hereby claimed and its disclosure incorporated herein by reference.

### Field of the Invention

This invention relates to the preparation of novel polymers comprising vinyl acetate and neoalkanoic acid vinyl ester monomers. The polymers contain one or more additional comonomers selected from, for example, α-olefin, alkyl acrylates and self-crosslinking monomers. Such polymers have utility in a variety of applications as binders for use in fibrous products and optionally other applications.

### Background of the Invention

The use of aqueous copolymers as binders for bonding and coating fiber structures such as woven fabrics, nonwovens and waddings of textile fiber or textile yarns is known. Copolymers of vinyl ester copolymers which comprise self-crosslinking comonomer units with N-methylol or N-methylol ether functions to improve their strength are often used. Up to 10% by weight of N-methylol(meth)acrylamide (NMA or NMMA) are usually copolymerized.

US 2005/0009428 of Porter et al. discloses coated reinforcing fabrics for cementitious materials. A resinous coating is generally disclosed which could include among many other polymers, vinyl esters.

Japanese Patent Application Publication No. 2004-217724 of Seiji et al. discloses an aqueous emulsion which has excellent water resistance, polymerization stability and storage stability and a process to prepare the emulsion polymer. The vinyl ester monomer that can be used is vinyl acetate with the addition of ethylene. The emulsion can be used as an adhesive for paper coatings, general woodwork, and as a binder for nonwoven products.

United States Patent Application Publication No. 2002/0065361 of Tanimoto et al. discloses a polyvinyl ester resin emulsion having a high viscosity and good water resistance. The emulsion is produced in a method of polymerizing a vinyl ester monomer in the presence of polyvinyl alcohol serving as the protective colloid and in the presence of a water-insoluble, hydroxyl-group containing compound, and can be used as an adhesive that can be readily formed into transparent films. Vinyl esters that can be used in the invention include vinyl formate, vinyl acetate, vinyl propionate, and vinyl pivalate. Ethylene can be added to the emulsion in the range of 3-35 wt% to improve water resistance and heat resistance.

United States Patent Application Publication No. 2002/0069965 of Koehler et al. discloses a process for preparing adhesives wherein the adhesive has improved adhesion. The adhesive is made by polymerizing a comonomer mixture comprising the following of: a) one or more monomers from the group consisting of the vinyl esters of unbranched and branched carboxylic acids of 1 to 10 carbon atoms, the esters of acrylic acid and methacrylic acid with branched and unbranched alcohols of 1 to 12 carbon atoms, vinyl aromatic compounds, vinyl halides and alpha-olefins, and b) from 0.01 to 50% by weight, based on the overall weight of the comonomers, of a vinyl ester of alpha-branched tertiary monocarboxylic acids of 11 carbon atoms, in the presence of c) from 0.1 to 15% by weight, based on the overall weight of the comonomers, of polyvinyl alcohol. Some of the preferred vinyl esters can be vinyl acetate, VeoVa 9/10, and vinyl 2-ethylhexanoate.

EP 0 851 015 to Schilling et al. discloses an adhesive having low VOC that is based on a polyvinyl alcohol stabilized vinyl ester ethylene copolymer dispersion comprised of 100 parts by weight polyvinyl ester portion, 10 to 100 parts by weight vinyl ester ethylene copolymer, and 1 to 10 parts by weight part or full-soaped polyvinyl alcohol with a viscosity from 40 to 120 mPas and a degree of hydrolysis from 85 to 100 mol%. The polyvinylester portion contains 80-100 wt. % of several vinyl esters of branched or unbranched alkyl carbonic acids with 1-18 carbon atoms and 0-20 wt. % other or multiple ethylenic unsaturated monomer units.

United States Patent No. 6,730,718 to Jakob discloses a discoloration resistant dispersion adhesive with a prolonged pot life. Adhesives comprising at least a) one homopolymeric and/or copolymeric polyvinyl ester, b) one polymeric protective colloid, c) one water-soluble compound which can be complexed with the polymeric protective colloids, and d) at least two, at least partly masked polyaldehydes which release aldehyde groups again in acidic media, wherein at least one masked polyaldehyde is a glyoxal derivative and at least one other masked polyaldehyde is a derivative of a polyaldehyde having at least 3 carbon atoms have been found to have a long pot life and a high level of water resistance and color constancy. Examples of suitable monomeric units for the homo- and copolymeric polyvinyl esters include, for example, vinyl acetate, vinyl 2-ethylhexanoate, and vinyl isobutyrate.

United States Patent Application Publication No. 2007/0184732 of Lunsford et al. discloses a high strength polyvinyl acetate binder utilized for fibrous substrates. The composition of the binder is comprised of water and an emulsion resin comprising from 50 pphwn to 100 pphwn vinyl acetate monomer units and from 4 to 15 pphwn post-crosslinking monomer composition.

United States Patent Application Publication No. 2005/0032970 of Jakob et al. discloses water resistant adhesives comprised of, for example: a) a copolymer based on one or more poly(vinyl esters), preferably based on poly(vinyl acetate), the poly(vinyl ester) additionally containing 0.01%-1.5% by weight, preferably 0.01 %-1 %, based on the total amount of all monomers, of one or more crosslinkable comonomer units containing N-methylol groups, preferably derived from N-methylol(meth)acrylamide, b) 1%-20% by weight, based on the total amount of all monomers, of at least one protective colloid, preferably poly(vinyl alcohol), c) from 0.001 % to 1% by weight, based on the amount of the polymer dispersion, of at least one derivative partly etherified at least with one or more alkanols and from the group of hydroxymethylated cyclic ethyleneureas, hydroxymethylated cyclic propyleneureas, hydroxymethylated bicyclic glyoxal diureas or hydroxymethylated bicyclic malonaldehyde diureas, and d) at least one acidic metal salt and/or an acid sufficient amount to establish a pH of 2 to 6, preferably from 2.5 to 4. The poly(vinyl ester) that can be used are vinyl ester monomers preferably include vinyl formate, vinyl acetate, vinyl propionate, vinyl isobutyrate, vinyl pivalate, and vinyl 2-ethylhexanoate.

EP 1 580 244 of Faust et al. discloses a water-based bicomponent wood adhesive having improved heat resistance and extended pot life. The adhesive is comprised of vinyl acetate and N-methylolacrylamide as a cross-linking agent and also including an aromatic and/or cyclo aliphatic monomer, such as 2-phenoxy ethyl acrylate and/or isobornyl methacrylate, and methyl methacrylate. Additional vinyl esters that can be used are vinyl formate, vinyl isobutyrate, vinylpivalate, vinyl 2-ethylhexanoate, vinyl esters of saturated, branched monocarboxylic acids having 9 to 10 carbon atoms in the acid radical, such as VeoVa™ 9 or VeoVa™ 10, vinyl esters of relatively long-chain, saturated or unsaturated fatty acids, such as, for example, vinyl laurate, vinyl stearate and vinyl esters of benzoic acid and substituted derivatives of benzoic acid, such as vinyl p-tertbutylbenzoate.

United States Patent No. 5,434,216 to Mudge et al. discloses a latex adhesive used for woodworking having improved water, heat, and creep resistance. The composition of the adhesive is based on vinyl acetate / N-methylolacrylamide polymer emulsions which are stabilized with 1.5 to 2.5% by weight of 88% hydrolyzed polyvinyl alcohol and 1 to 4% by weight of 95-99.5% hydrolyzed polyvinyl alcohol, the two alcohols comprising at least 3% by weight of the emulsion solids. The N-methylolacrylamide and vinyl acetate copolymers can also be used in combination with: (1) other vinyl esters including vinyl formate, vinyl propionate, vinyl butyrate, vinyl isobutyrate, vinyl valerate, vinyl 2-ethylheanoate, vinyl isooctanoate, vinyl nonoate, vinyl decanoate, vinyl pivalate, vinyl versatate, and the like; (2) ethylene; (3) alkyl esters of acrylic and methacrylic acid such as methyl acrylate, methyl methacrylate, ethyl acrylate, ethyl methacrylate, etc.; (4) substituted or unsubstituted mono and dialkyl esters of αβ-unsaturated dicarboxylic acids such as the substituted and unsubstituted mono and dibutyl, mono and diethyl maleate esters as well as the corresponding fumarates, itaconates and citronates; (5) αβ-unsaturated carboxylic acids such as crotonic, acrylic, methacrylic, fumaric, maleic, itaconic and citraconic acids.

Copolymers of vinyl acetate and vinyl esters of neoalkanoic acid have been discussed in the literature for use in paints. *See* Smith et al., New Vinyl Ester Monomers for Emulsion Polymers, Progress in Organic Coating, Vol. 22, pp. 19-25, Elsevier (1993) which discusses water resistance and coating performance as well as Bassett, Hydrophobic Coatings from Emulsion Polymers, Journal of Coatings Technology, Vol. 73, No. 912, pp. 43-55 (2001) which discusses pigmented paints.

It is an object of the present invention to provide copolymers comprising vinyl acetate and neoalkanoic acid vinyl esters, optionally with additional monomer units and/or crosslinking functionalities, as well as binders based on such copolymers, to improve properties such as, for example, solvent resistance, as well as offer high dry strength, wet strength, mechanical strength, etc. in articles comprising such copolymers.

### Summary of the Invention

The present invention is directed to polymer compositions comprised of at least vinyl acetate and neoalkanoic acid vinyl esters in addition to other comonomers. Preferred compositions include self crosslinking monomers such as for example, N-methylolacrylamide.

The invention is generally directed to a polymer composition comprising a copolymer obtainable by reacting: a) 1-99 pphwm, preferably 10-90 pphwm of vinyl acetate; and b) 40-5 pphwm, preferably 30-8 pphwm, more preferably 25-8 pphwm of at least one vinyl ester of neoalkanoic acid, and c) at least one additional comonomer selected from the group comprising: (i) 40-1 pphwm, preferably 35-5 pphwm, more preferably 25-10 pphwm of at least one α-olefin, (ii) 10-0.1 pphwm, preferably 8-0.5 pphwm, more preferably 8-2 pphwm of at least one functional monomer, (iii) 40-1 pphwm, preferably 30-5 pphwm, more preferably 20-5 pphwm of at least one ester of ethylenically unsaturated carboxylic acids; and d) optionally other comonomers, wherein said copolymer is composed and synthesized so as to be useful in or as binders for fibrous substrates such as woven or nonwoven products including textiles, apparel in general, papers, scrim, engineered fabrics, glass or other mineral fibers, roofing or flooring materials.

Further details and uses will become apparent from the discussion which follows.

### Detailed Description of the Invention

The invention is described in detail below with reference to numerous embodiments and numerous examples. Such discussion is for purposes of illustration only. Modifications to particular examples within the spirit and scope of the present invention will be readily apparent to one of skill in the art. Terminology used herein is given its ordinary meaning consistent with the exemplary definitions herein.

The term "functional monomer" includes self-crosslinking monomers as well as monomer units with functional moieties, including stabilizing moieties such as ionic groups or hydroxyl groups capable of reacting with a crosslinking material and so forth.

The abbreviation "pphwm" refers to parts per hundred weight monomer based on monomer supplied to the reaction medium unless otherwise indicated.

The terminology "alkyl (meth)acrylate" refers to alkyl acrylates and alkyl methacrylates, typically C₁-C₁₂ alkyl such as butyl acrylate and so forth.

Other terminology and abbreviations are noted below.

Polymers of this invention are predominantly comprised of vinyl acetate monomer (VA) and vinyl esters of neoalkanoic acids. Vinyl esters of neoalkanoic acids have the following general structure: 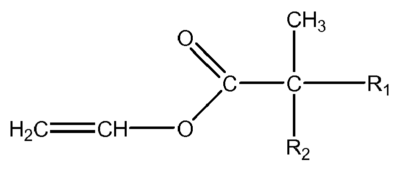 where R₁ and R₂ are alkyl groups which together may typically collectively contain from about 6-8 carbon atoms. Veo Va™ neoalkanoic vinyl esters are available from Hexion Specialty Chemicals of Columbus, Ohio. In VeoVa™ 9, R₁ and R₂ together contain about 6 carbon atoms. In VeoVa™ 10, R₁ and R₂ together contain about 7 carbon atoms. In VeoVa™ 11, R₁ and R₂ together contain about 8 carbon atoms. Inclusion of neoalkanoic acid vinyl esters in polymer systems introduces hydrophobicity to the polymer that can provide hydrocarbon solubility or adhesion to low-energy surfaces and also add steric bulk to the polymer providing it with hydrolytic stability.

Additional monomers such as α-olefin monomers are also provided. Examples of suitable α-olefin monomers include ethylene, propylene, α-butylene, α-pentylene, α-hexylene , α-octylene and so forth.

Preferred polymers include emulsion interpolymers as described herein, however the optional inclusion of other comonomers is contemplated. Other potentially useful comonomers 1-heptene, butadiene, hexadiene, isoprene, styrene, methyl styrene, divinyl benzene and the like. Representative of still other ethylenically unsaturated monomers include halogenated monomers such as vinyl chloride, vinylidene chloride, chloroprene, chlorostyrene and the like.

The inventive copolymers may be made by a variety of techniques by which vinyl acetate polymers are made including by bulk, solution, suspension and emulsion processes as is described in the Kirk-Othmer Encyclopedia of Chemical Technology, 4th Ed., Vol. 24, pp. 954-963 (Wiley 1996), the disclosure of which is incorporated herein by reference. The preparation of the inventive compositions can be carried out using continuous or discontinuous processes of free-radical emulsion polymerization. The polymerization may be conducted with the assistance of customary reaction vessels such as loop or stirred reactors. Preference is given to using discontinuous processes such as batch, combined batch/feed stream, pure feed stream processes or feed stream processes onto nucleating particles.

In these processes, water-soluble and/or oil-soluble initiator systems such as peroxodisulfates, azo compounds, hydrogen peroxide, organic hydroperoxides or dibenzoyl peroxide are employed. These may be used either by themselves or in combination with reducing compounds such as Fe(II) salts, sodium pyrosulfite, sodium hydrogen sulfite, sodium sulfite, sodium dithionite, sodium formaldehyde-sulfoxylate, ascorbic acid, as a redox catalyst system. The emulsifiers, and /or where appropriate, protective colloids, additives and/or auxiliaries may be added before, during or after the polymerization. Examples of emulsifiers include alkyl aryl polyglycol ethers and alkyl polyglycol ethers each preferably having from 8 to 50 mol of ethylene oxide units per molecule, block copolymers of ethylene oxide with propylene oxide, alkylsulfonates or alkyarylsulfonates, alkyl sulfates, alkyl and aryl ether sulfates and phosphates each having preferably from 8 to 18 carbon atoms in the lipophilic part and up to 50 ethylene oxide or propylene oxide units in the hydrophilic part, and also monoesters or diesters of sulfosuccinic acid or alkylphenols each having preferably from 8 to 18 carbon atoms in the alkyl radical. A preferred type of emulsifier does not contain linear alkyl phenol units in the lipophilic part.

Optionally, the polymeric compositions of the invention are grafted onto a polyhydroxy polymer, such as polyvinyl alcohol (PVOH), i.e.:

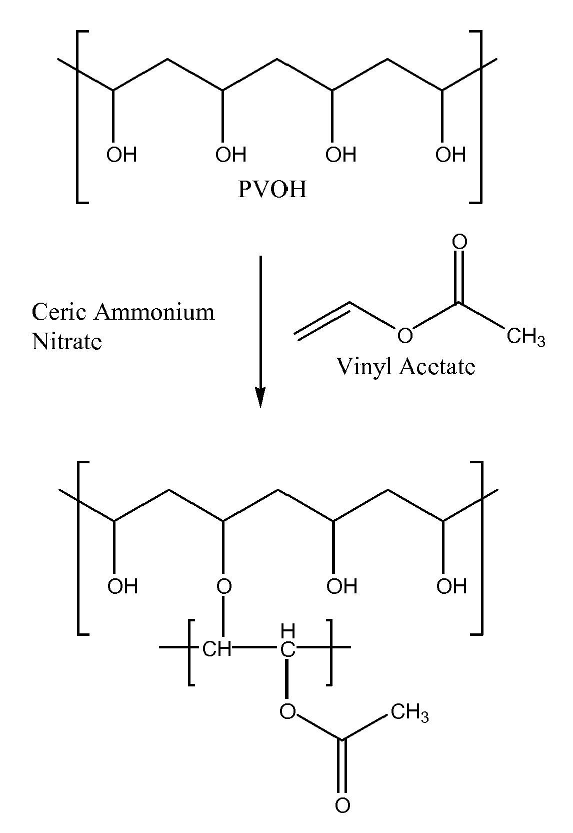

As is described in United States Patent No. 5,354,803 to Dragner et al.*,* the disclosure of which is incorporated herein by reference. Any suitable technique for grafting the composition with a suitable polymer may be used. Other suitable polyhydroxy compounds for grafting may include sugars, cellulose and starch.

Representative of esters of ethylenically unsaturated carboxylic acids which may also be used include alkyl acrylates and methacrylates wherein the alkyl group contains 1-12 or 1-10 carbon atoms and esters of such acids as butenoic, maleic, fumaric, itaconic and the like. Representative of other esters which have an ethylenic unsaturation and are preferred include vinyl formate, vinyl propionate or butyrate, and the like. The polymer backbone in the acrylic ester latexes can be either hydrophilic or hydrophobic and it can comprise polymerized soft monomers and/or hard monomers. The soft and hard monomers are monomers which, when polymerized, produce soft or hard polymers, or polymers in-between. Preferred soft acrylic ester monomers are selected from alkyl acrylates containing 2 to 8 carbon atoms in the alkyl group and include ethyl acrylate, propyl acrylate, n-butyl acrylate, and 2-ethylhexyl acrylate. The hard acrylic ester monomers are selected from alkyl methacrylates containing up to 3 carbon atoms in the alkyl group and from non-acrylic monomers such as styrene and substituted styrenes, acrylonitrile, vinylchloride, and generally any compatible monomer the homopolymer of which has a Tg above 50°C. Preferred acrylic ester monomers are selected from alkyl methacrylates containing 1 to 12 carbon atoms in the alkyl group, especially methyl methacrylate. See United States Patent No. 5,021,529 to Garret*.*

Further monomers copolymerizable with vinyl esters are ethylenically unsaturated, ionic monomers, for example compounds which bear at least one carboxylic acid, sulfonic acid, phosphoric acid or phosphonic acid group directly adjacent to the double bond unit, or else are bonded thereto via a spacer. Examples include:
α,β-unsaturated C₃-C₈-monocarboxylic acids, α,β-unsaturated
C₅-C₈-dicarboxylic acids and anhydrides thereof, and monoesters of α,β-unsaturated C₄-C₈-dicarboxylic acids.

Preference is given to unsaturated monocarboxylic acids, for example acrylic acid, methacrylic acid, and crotonic acid and the anhydrides thereof; unsaturated dicarboxylic acids, for example maleic acid, fumaric acid, itaconic acid and citraconic acid and the monoesters thereof with C₁-C₁₂-alkanols such as monomethyl maleate and mono-n-butyl maleate. Further preferred ethylenically unsaturated ionic monomers are ethylenically unsaturated sulfonic acids, for example vinylsulfonic acid, 2-acrylamido-2-methylpropanesulfonic acid, 2-acryloyloxy- and 2-methacryloyloxyethanesulfonic acid, 3-acryloyloxy- and 3-methacryloyloxypropanesulfonic acid and vinylbenzenesulfonic acid, and ethylenically unsaturated phosphonic acids, for example vinylphosphonic acid.

In addition, as well as the acids mentioned, it is also possible to use the salts thereof, preferably the alkali metal salts thereof or the ammonium salts thereof and especially the sodium salts thereof, for example the sodium salts of vinylsulfonic acid and of 2-acrylamidopropanesulfonic acid.

The ethylenically unsaturated free acids mentioned are present in aqueous solution at pH 11 predominantly in the form of their conjugate bases in anionic form and can, like the salts mentioned, be referred to as anionic monomers.

Functional monomers include postcrosslinking comonomers (referred to in the art sometimes as self-crosslinking monomers). These monomers include acrylamidoglycolic acid (AGA), methyl methacrylamidoglycolate (MMAG), N-methylolacrylamide (NMA), N-methylolmethacrylamide (NMMA), allyl-N-methylolcarbamate, alkyl ethers such as the isobutoxy ethers or esters ofN-methylolacrylamide, of N-methylolmethacrylamide and of allyl N-methylolcarbamate.

Also suitable as functional monomers are cross-linking epoxide-functional comonomers such as glycidyl methacrylate and glycidyl acrylate. Further examples are silicon-functional comonomers such as acryloxy-propyltri(alkoxy)silanes and methacryloxypropyltri(alkoxy)silanes, vinyltrialkoxysilanes and vinylmethyldialkoxysilanes, with alkoxy groups which can be present being, for example, methoxy, ethoxy and ethoxypropylene glycol ether radicals. Mention may also be made of useful monomers having hydroxy or CO groups, for example, hydroxyalkyl methacrylates and acrylates such as hydroxyethyl, hydroxypropyl or hydroxybutyl acrylate or methacrylate and also compounds such as diacetoneacrylamide and acetylacetoxyethyl acrylate or methacrylate, see United States Patent Application Publicaton No. 2007/0112117 to Weitzel*.*

Crosslinkers that can be used as functional monomers in conjunction with the present invention are also precrosslinking comonomers such as multiply ethylenically unsaturated comonomers, for example divinyl adipate, diallyl maleate, allyl methacrylate or triallyl cyanurate and the like.

The polymer compositions in the present invention may be used in connection with emulsions in general, however are especially useful as or as part of binder for fibrous products such as: woven or nonwoven products including textiles, apparel in general, papers, scrim, engineered fabrics, glass or other mineral fibers, roofing or flooring materials and the like. Among the properties which may be enhanced are: alkaline resistance; dimensional/Structure integrity ("Verschiebefestigkeit"); solvent resistance; dry tensile; wet bond strenghts; wet bond strenghts at elevated temperatures setting speed; adhesion to nonpolar substrates; impact resistance; thermal stability; strand integrity; lower water absorption; increased hydrophobicity; higher wet tensile strength and better water spot times. Particular uses may also include adhesives for porous substrates such as wood or non-porous substrates such as metals, plastics or glass; construction compositions including cementitious compositions, caulks and sealants; functional coatings for waterproofing and so forth; powders such as redispersible powders for waterproofing, adhesives and the like.

Furthermore, there is provided in accordance with the invention in a first aspect a polymer composition comprising (i.e. obtainable by reacting) : a) 1-99 pphwm, preferably 5-95 pphwm of vinyl acetate monomer units; and b) 40-10 pphwm of monomer units from vinyl esters of neoalkanoic acid, wherein said polymer is composed and synthesized so as to be useful in or as binders for fibrous substrates, such as woven or nonwoven products including textiles, apparel in general, papers, scrim, engineered fabrics, glass or other mineral fibers, roofing or flooring materials. More typically, the polymer composition includes from 10-90 pphwm vinyl acetate monomer units as well as vinyl esters of neoalkanoic acid of the structural formula: 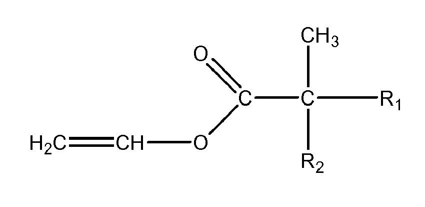 where R₁ and R₂ are alkyl groups which together may collectively contain from about 6-8 carbon atoms, more preferably, wherein R₁ and R₂ collectively contain 7 carbon atoms. In some cases, the polymer also includes c) 40-1, preferably 35-5 pphwm of α-olefin monomer units, typically wherein the α-olefin monomer units are ethylene monomer units.

In another aspect of the invention, there is provided a polymer composition comprising: a) 1-99 pphwm, preferably 5-95 pphwm of vinyl acetate monomer units; b) 40-10 pphwm of monomer units from vinyl esters of neoalkanoic acid; and c) 10-0.1 pphwm of functional monomer units, wherein said polymer is composed and synthesized so as to be useful in or as binders for fibrous substrates, such as woven or nonwoven products including textiles, apparel in general, papers, scrim, engineered fabrics, glass or other mineral fibers, roofing or flooring materials. These compositions may have the further components and features noted above and below.

The functional monomer units are preferably crosslinking monomer units and still more preferably self-crosslinking monomer units. In preferred embodiments, the polymer composition includes from 8-0.5 pphwm self-crosslinking monomer units and may include 40-1, preferably 35-5, pphwm of α-olefin monomer units such as ethylene units.

In still another aspect of the invention, there is provided a polymer composition comprising: a) 1-99 pphwm, preferably 5-95 pphwm of vinyl acetate monomer units; b) 40-10 pphwm of monomers units from vinyl esters of neoalkanoic acid; c) 40-1, preferably 20-5 pphwm of alkyl (meth)acrylate monomer units; and d) 10-0.1 pphwm of functional monomer units, wherein said polymer is composed and synthesized so as to be useful in or as binders for fibrous substrates such as woven or nonwoven products including textiles, apparel in general, papers, scrim, engineered fabrics, glass or other mineral fibers, roofing or flooring materials. The alkyl (meth) acrylate monomer units are generally selected from (C₁-C₁₂) alkyl (meth)acrylate units, and may be, for example, butyl acrylate units. These compositions likewise include additional components and features noted above and below.

The foregoing polymer composition are incorporated into any suitable article of manufacture , for example the compositions may be used as a binder for the manufacture of fibrous products including woven or nonwoven products, such as textiles, apparel in general, papers, scrim, engineered fabrics, glass or other mineral fibers, roofing or flooring materials.

Likewise, any of the polymer compositions described herein may be grafted to a polyhydroxy polymer to form a graft copolymer.

### Examples

The following examples are presented to further illustrate the present invention and should not be taken as limiting the invention, the spirit and scope of which is set forth in the appended claims. The parts and percentages indicated in the examples are by weight unless noted otherwise.
Abbreviations:
VA: Vinyl acetate monomer; inhibitor content 3 - 5 ppm HQ; obtained from Celanese Chemicals Europe GmbH; used as supplied, unless otherwise indicated;
VB: Vinyl Benzoate; stabilized with 40 ppm MEHQ; available from Japan VAM and Poval Co., Ltd.; used as supplied, unless otherwise indicated;
V2EH: Vinyl 2-ethyl hexanoate monomer; stabilized with 20 ppm MEHQ; available from Japan VAM and Poval Co, Ltd; used as supplied, unless otherwise indicated;
VeoVa™: vinyl esters of versatic acid, obtained from Hexion.
E: Ethylene monomer.
NMA-LF is a blend of N-methylolacrylamide/acrylamide (48% aq. solution typically) commercially available from Cytec Industries.

### Example Set 1

### Binders for Engineered Fabric, Glass Fiber for Roofing and Flooring Products and Textiles/Nonwovens (VA/VV10)

### Polymerization Procedures

### Comparative Example 1-1: Preparation of a Polymer comprising VA/NMA-LF 95/5

An aqueous solution was prepared by the addition of 1.33 g of a 30% aqueous solution of a secondary alkane sulfonate anionic surfactant, (Hostapur^{™} SAS 30 from Clariant), 8.19 g of an 80% aqueous solution of a an alcohol ethoxylate nonionic surfactant, (Emulan^{™} TO 2080 from BASF), to 908.5 g of deionized water and heated to 50°C while stirring until the surfactants were dissolved. The solution was cooled and 1.76 g of sodium bicarbonate was added. Then the aqueous solution was charged to a 3-liter glass reactor equipped with a stirrer and dropping funnels.

The reactor was heated to 65°C and 120.98 g of vinyl acetate was added.

A second aqueous solution was prepared by the addition of 2.68 g of a 30% aqueous solution of a secondary alkane sulfonate anionic surfactant, (Hostapur^{™} SAS 30 from Clariant), and 33.49 g of an 80% aqueous solution of an alcohol ethoxylate nonionic surfactant, (Emulan^{™} TO 2080 from BASF), to 214.94 g of deionized water and heated to 50°C while stirring until the surfactants were dissolved. After cooling the surfactant solution 128.42 g of an approximately 48% active blend of N-methylolacrylamide and acrylamide, (Cylink^{™} NMA-LF from Cytec), 1.74 g of sodium persulfate and 1.21 g of sodium bicarbonate were added to the aqueous solution. The second aqueous solution and 1050.87 g of vinyl acetate were mixed to form a pre-emulsion.

When the reactor temperature stabilized at 65°C, a solution of 2.67 g of sodium persulfate in 20.01 g of deionized water was added. When an exotherm was observed, the temperature was increased to 75°C. At 70°C the addition of the pre-emulsion was commenced to last 4 hours. After the addition was complete, a solution of 0.11 g of sodium persulfate in 5.87 g of deionized water was added and the temperature was increased to 80°C for 1 hour. The reactor was then cooled to 50°C, and a solution of 2.04 g of t-butyl hydroperoxide in 12.01 g of deionized water was added over 10 minutes. Then a solution of 1.54 g of sodium metabisulfite in 12.01 g of water was over 10 minutes. The reaction mixture was cooled and filtered through a 180µ mesh.

The resultant dispersion had a solids content of 49.7%, viscosity of 56 mPa.s, pH of 4.4, grit, (measured on a 40 µ mesh), of 0.12% and a Tg, (onset, by DSC), of 35.6°C.

### Example 1-2: Preparation of a Polymer comprising VA/VeoVa^{™} 10/NMA-LF 68.75/25/6.25

An aqueous solution was prepared by the addition of 1.33 g of a 30% aqueous solution of a secondary alkane sulfonate anionic surfactant, (Hostapur^{™} SAS 30 from Clariant), 9.36 g of a 70% aqueous solution of an alcohol ethoxylate nonionic surfactant, (Emulsogen^{™} PN 287 from Clariant) to 885.5 g of deionized water and heated to 50°C while stirring until the surfactants were dissolved. The solution was cooled and 1.76 g of sodium bicarbonate was added. Then the aqueous solution was charged to a 3-liter glass reactor equipped with a stirrer and dropping funnels.

The reactor was heated to 65°C. A first monomer mixture comprising 89.30 g of vinyl acetate, 30.44 g of VeoVa^{™} 10, (Hexion), was added to the reactor.

A second monomer mixture comprising 758.73 g of vinyl acetate and 277.93 g of VeoVa^{™} 10, (Hexion), was prepared. A second aqueous solution was prepared by the addition of 2.68 g of a 30% aqueous solution of a secondary alkane sulfonate anionic surfactant, (Hostapur^{™} SAS 30 from Clariant), and 38.28 g of a 70% aqueous solution of an alcohol ethoxylate nonionic surfactant, (Emulsogen^{™} EPN 287 from Clariant), to 161.94 g of deionized water and heated to 50°C while stirring until the surfactants were dissolved. After cooling the surfactant solution 160.61 g of an approximately 48% active blend of N-methylolacrylamide and acrylamide, (Cylink^{™} NMA-LF from Cytec), was added to the aqueous solution. The second monomer mixture and the second aqueous solution were mixed to form a pre-emulsion.

When the reactor temperature stabilized at 65°C, a solution of 2.67 g of sodium persulfate in 20.0 g of deionized water was added. When an exotherm was observed, the temperature was increased to 75°C. At 70°C the additions of the pre-emulsion and a solution of 1.74 g of ammonium persulfate and 1.21 g of sodium bicarbonate dissolved in 53.0 g of deionized water were commenced to last 4 hours. After the additions were complete, a solution of 0.11 g of sodium persulfate in 5.87 g of deionized water was added and the temperature was increased to 80°C for 1 hour. The reactor was then cooled to 50°C, and a solution of 2.04 g of t-butyl hydroperoxide in 12.08 g of deionized water was added over 10 minutes. Then a solution of 1.54 g of sodium metabisulfite in 12.08 g of water was added over 10 minutes. The reaction mixture was cooled and filtered through a 180µ mesh.

The resultant dispersion had a solids content of 50.0%, viscosity of 238 mPa.s, pH of 4.2, grit, (measured on a 40 µ mesh), of 0.005% and a Tg, (onset, by DSC), of 21.7°C.

### Example 1-3: Preparation of a Polymer comprising VA/VeoVa^{™} 10/BA/NMA-LF 57.5/20/17.5/5

A similar procedure to example 1-2 was followed except that some butyl acrylate was incorporated and the levels of vinyl acetate, VeoVa^{™} 10, (Hexion), and NMA-LF, (Cytec), were varied. The first monomer mixture comprised 71.88 g of vinyl acetate, 25.00 g of VeoVa 10 and 21.88 g of butyl acrylate. The second monomer mixture comprised 646.88 g of vinyl acetate, 225.00 g of VeoVa 10 and 196.88 g of butyl acrylate. The amount of an approximately 48% active blend of N-methylolacrylamide and acrylamide, (Cylink^{™} NMA-LF from Cytec), added to the second aqueous solution to make the pre-emulsion was 130.21 g.
The resultant dispersion had a solids content of 49.6%, viscosity of 504 mPa.s, pH of 4.5, grit, (measured on a 40 µ mesh), of 0.010% and a Tg, (onset, by DSC), of 8.1°C.

### Example 1-4: Preparation of a Polymer comprising VA/VeoVa^{™} 10/E/NMA-LF 60/25/10/5

An aqueous solution was prepared by the addition of 125.8 g of a 10% aqueous solution of hydroxyethyl cellulose, having a Brookfield viscosity at 5% concentration of 100 - 180 mPa.s at 25°C, (Natrosol^{™} 250 LR from Aqualon), 282.6 g of a 70% aqueous solution of a an alcohol ethoxylate nonionic surfactant, (Emulsogen^{™} EPN 287 from Clariant), and 30.5 g of a 30% aqueous solution of a secondary alkane sulfonate anionic surfactant, (Hostapur^{™} SAS 30 from Clariant), to 2984 g of deionized water while stirring. 38.1 g of a 30% active solution of sodium vinylsulfonate was added, followed by 0.19 g of Mohr's salt, then the pH was adjusted to pH 4.4 by the use of phosphoric acid. Then the aqueous solution was charged to a 10-liter pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 16.76% of a monomer mixture comprising 2891 g of vinyl acetate and 1203 g of VeoVa^{™} 10, (Hexion), was pumped to the reactor. 480.3 g of ethylene was metered to the reactor, followed by 10% of a solution comprising 22.9 g of sodium metabisulfite dissolved in 274.5 g of deionized water.

When the reactor temperature stabilized at 35°C, the additions of a solution of 30.2 g of sodium persulfate dissolved in 274.5 g of deionized water and the remainder of the sodium metabisulfite solution were commenced at a constant rate to last 6 hours. The temperature was gradually increased to 65°C over a period of approximately 20 minutes, at which time the additions of the remainder of the monomer mixture and a solution of 500.3 g of an approximately 48% active blend of N-methylolacrylamide and acrylamide, (Cylink^{™} NMA-LF from Cytec), in 452.9 g of deionized water were added separately to the reactor at a constant rate over 5 hours. The reactor temperature was maintained at 65°C for the duration of the reaction.

After the reaction was complete, the reaction mixture was cooled to 50°C and transferred to a degassing vessel. A solution comprising 3.66 g of sodium metabisulfite and 0.09 g of ferrous sulfate heptahydrate in 45.7 g of deionized water was added over 5 minutes, followed by a solution comprising 4.57 g of t-butylhydroperoxide in 45.7 g of deionized water over 30 minutes. The mixture was cooled, then 0.32 g of Agitan^{™} 282 (from Münzing) and 14.64 g of a 12.5% active solution of ammonium hydroxide were added, and the resultant dispersion was filtered through a 180µ mesh.

The resultant dispersion had a solids content of 50.7%, viscosity of 190 mPa.s, pH of 3.6, grit, (measured on a 40 µ mesh), of 0.012% and a Tg, (onset, by DSC), of -1.8°C.

### Example 1-5: Preparation of a Polymer comprising VA/VeoVa^{™} 10/E/NMA-LF 63.9/9.5/22.0/4.6

An aqueous solution was prepared by the addition of 330.8 g of a 10% aqueous solution of hydroxyethyl cellulose, having a Brookfield viscosity at 5% concentration of 100 - 180 mPa.s at 25°C, (Natrosol^{™} 250 LR from Aqualon), 777.5 g of a 70% aqueous solution of a an alcohol ethoxylate nonionic surfactant, (Emulsogen^{™} EPN 287 from Clariant), to 7954.5 g of deionized water while stirring. 100.2 g of a 30% active solution of sodium vinylsulfonate was added, followed by 0.51 g of Mohr's salt, then the pH was adjusted to pH 4.4 by the use of phosphoric acid. Then the aqueous solution was charged to a 30-liter pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 20.0% of a monomer mixture comprising 8058.9 g of vinyl acetate and 1202.8 g of VeoVa^{™} 10, (Hexion), was pumped to the reactor. 2766.5 g of ethylene was metered to the reactor, followed by 10% of a solution comprising 60.1 g of sodium metabisulfite dissolved in 721.7 g of deionized water.

When the reactor temperature stabilized at 35°C, the additions of a solution of 79.4 g of sodium persulfate dissolved in 721.7 g of deionized water and the remainder of the sodium metabisulfite solution were commenced at a constant rate to last 6 hours. The temperature was gradually increased to 65°C over a period of approximately 30 minutes, at which time the additions of the remainder of the monomer mixture and a solution of 1202.8 g of an approximately 48% active blend ofN-methylolacrylamide and acrylamide, (Cylink^{™} NMA-LF from Cytec), in 1190.8 g of deionized water were commenced and added separately to the reactor at a constant rate over 5 hours. The reactor temperature was maintained at 65°C for the duration of the reaction.

After the reaction was complete, the reaction mixture was cooled to 30°C and discharged. 2.1 kg of the discharged material was transferred to a 3-liter glass reactor equipped with a stirrer and dropping funnels, treated with 2.7 g of a 12% active solution of ammonium hydroxide, then heated to 60°C. A solution comprising 1.04 g of sodium metabisulfite and 0.022 g of ferrous sulfate heptahydrate in 11.0 g of deionized water was added over 5 minutes, followed by a solution comprising 1.96 g of t-butylhydroperoxide in 11.0 g of deionized water over 30 minutes. The reactor was cooled to below 30°C, and the resultant dispersion was filtered through a 180µ mesh.

The resultant dispersion had a solids content of 51.9%, viscosity of 514 mPa.s, pH of 4.7, grit, (measured on a 40 µ mesh), of 0.067% and a Tg, (onset, by DSC), of -12.1°C.

### Example 1-6: Preparation of a Polymer comprising VA/VeoVa^{™} 10/E/NMA-LF/CA 63.6/9.5/21.8/4.6/0.5

An aqueous solution was prepared by the addition of 330.8 g of a 10% aqueous solution of hydroxyethyl cellulose, having a Brookfield viscosity at 5% concentration of 100 - 180 mPa.s at 25°C, (Natrosol^{™} 250 LR from Aqualon), 777.5 g of a 70% aqueous solution of a an alcohol ethoxylate nonionic surfactant, (Emulsogen^{™} EPN 287 from Clariant), to 7911.4 g of deionized water while stirring. 100.2 g of a 30% active solution of sodium vinylsulfonate was added, followed by 0.51 g of Mohr's salt, then the pH was adjusted to pH 4.4 by the use of phosphoric acid. Then the aqueous solution was charged to a 30-liter pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 20.0% of a monomer mixture comprising 8058.9 g of vinyl acetate and 1202.8 g of VeoVa^{™} 10, (Hexion), was pumped to the reactor. 2766.5 g of ethylene was metered to the reactor, followed by 10% of a solution comprising 71.5 g of sodium metabisulfite dissolved in 857.6 g of deionized water.

When the reactor temperature stabilized at 35°C, the additions of a solution of 56.7 g of 70% active t-butyl hydroperoxide dissolved in 944.2 g of deionized water and the remainder of the sodium metabisulfite solution were commenced at a constant rate to last 6 hours. The temperature was gradually increased to 65°C over a period of approximately 30 minutes, at which time the additions of the remainder of the monomer mixture and a solution of 1202.8 g of an approximately 48% active blend of N-methylolacrylamide and acrylamide, (Cylink^{™} NMA-LF from Cytec), 64.95 g of crotonic acid and 34.9 g of 25% active ammonium hydroxide in 1190.8 g of deionized water were added separately to the reactor at a constant rate over 5 hours. The reactor temperature was maintained at 65°C for the duration of the reaction.

After the reaction was complete, the reaction mixture was cooled to 30°C and discharged, then 2.5 kg was transferred to a 3-liter glass reactor equipped with a stirrer and dropping funnels and heated to 60°C. A solution comprising 1.12 g of sodium metabisulfite and 0.024 g of ferrous sulfate heptahydrate in 11.8 g of deionized water was added over 5 minutes, followed by a solution comprising 2.11 g of t-butylhydroperoxide in 11.8 g of deionized water over 30 minutes. The reactor was cooled to below 30°C, and the resultant dispersion was filtered through a 180µ mesh.

The resultant dispersion had a solids content of 50.6%, viscosity of 1340 mPa.s, pH of 5.4, grit, (measured on a 40 µ mesh), of 0.004% and a Tg, (onset, by DSC), of -13.0°C.

### Application Test Procedures

### General Sample Preparation

The procedure for preparing the test specimens was as follows: A substrate was dip-nip saturated with the polymer dispersion and then thermally dried. Whatman #1 Filter Paper sheets, commercially available from Whatman, Inc., were used as substrate and were stored under controlled temperature (23 °C) and humidity (50%) conditions before use. The filter paper was cut to approximately 265x220 mm sheets and weighed.

The polymer dispersion (incl. 1% mono ammonium phosphate) was diluted to a solids level to achieve an add-on of about 20%. The Whatman filter paper was dip-nip saturated by passing the substrate through the dispersion bath and then passing the saturated sheets through the pressurized nip rolls of a dual roller saturator (Werner Mathis VFM or a similar saturator) to squeeze off the excess polymer dispersion. The saturated sheet was then placed into an oven (Mathis) and dried at 130 °C for 10 min. The saturated, dried sheet was reconditioned at controlled temperature and humidity conditions for a minimum of 12 hours. The sheet was reweighed and then % add-on was calculated.

### Water Spot Test

To test hydrophobicity, a micropipette drop of demineralized water was placed on the sheet and the time was measured until the water was fully absorbed.

### Cobb Test

Cobb test was applied according to DIN EN 20 535 (n.a. in the table means test not applicable due to a too hydrophilic polymer).

### Tensile Strength

Tensile strength was measured according to WSP 110.4 (05) WD. Therefore a 5 cm wide paper strip was clamped in a tensile testing machine (Lloyd LR100K) and a force applied to the sample until break occurred. Specimens tested in the wet condition were immersed in water at room temperature for 1 hour and tested when still wet. The tensile strength is the average of at least four measurements. The relative wet strength is calculated as the ratio of wet tensile strength to dry tensile strength.

### Formaldehyde

Formaldehyde was determined via HPLC from emulsion directly and from sheet after HCHO absorption in water (slight modification of ASTM D5910 / JIS L 1096-979).

**Table 1: Application Test Results**

| | Example No. | (Comparative) 1-1 | 1-2 | 1-3 | 1-4 | 1-5 | 1-6 |
|---|---|---|---|---|---|---|---|
| Latex formaldehyde | (ppm) | 83 | 112 | 129 | 202 | 60 | 51 |
| Sheet formaldehyde | (ppm) | 21 | 26 | 23 | 28 | 23 | 31 |
| | | | | | | | |
| Water Spot | (min) | 7 | 120 | 120 | 120 | 120 | 120 |
| Cobb | (g/m²) | n.a. | 15 | 15 | 15 | 14 | 13 |
| | | | | | | | |
| Tensiles | | | | | | | |
| Dry | (N/5 cm) | 294 | 281 | 258 | 233 | 218 | 219 |
| Wet | (N/5 cm) | 73 | 79 | 100 | 102 | 96 | 114 |
| Relative wet strength | (%) | 25 | 28 | 39 | 44 | 44 | 52 |

These results show that an improvement in hydrophobicity, wet tensile strength and retention of tensile strength after water soaking was achieved.
Scrim Binder Preparation of improved binder for scrims using VA and VeoVa^{™}10 as comonomers

### Example 2-1 Scrim Binder

The emulsion of Example 1-4 was also evaluated for scrim binder and alkali aging performance. The emulsion had the characteristics noted in Table 2 below.

**Table 2 - Emulsion Characteristics**

| | Example 2-1 |
|---|---|
| Vinyl acetate (%) | 60 |
| Ethylene (%) | 10 |
| VeoVa 10 (%) | 25 |
| NMA-LF (%) | 5 |
| Tg (°C) (by DSC) | -1.8 |
| Brookfield RVT 20 rpm, (23 °C) (mPa*s) | 190 |
| solids content (%) | 50.7 |

The test methods used to determine the tensile strength and elongation of the reinforcement as-delivered and after ageing were those set forth in the European Technical Approval Guidelines (ETAG 04) for construction products. The tensile strength and elongation of the reinforcement was measured in the weft and warp direction on 10 samples respectively on the as-delivered state and after immersion in alkaline solution (ageing) scrims. The samples measured 50 mm by at least 300 mm. They contained at minimum 5 threads within the width.

The free length of the sample between clamps was 200 mm. The tensile force was increased with a constant crosshead speed of (100 +/- 5) mm/min until failure occurred. The strength in N at failure and the elongation were recorded. The mean values of tensile strength and elongation were calculated from these individual values. The residual value was calculated from the mean tensile strength value after ageing in relation to the mean tensile strength value in the as-delivered state.

The test on the as-delivered state was conducted after conditioning the samples at (23+/- 2) °C and (50 +/- 5) %RH for at least 24 hours.

The sample was immersed for 28 days in alkaline solution at (23+/-2) °C. About 20 samples (10 in weft and 10 in warp direction) and stored in 4 liters of alkaline solution. The solution was composed as follows: 1 g NaOH, 4 g KOH, 0.5 g Ca(OH)₂ to 1 liter of distilled water.

The sample was rinsed by immersion 5 minutes in acid solution (5 ml HCl (35% diluted) to 4 liters water) and then placed successively in 3 baths of water (4 liters each). The samples were left for 5 minutes in each bath. They were subsequently dried at (23 +/-2) °C and (50 +/- 5) % RH for 48 hours.

According to the guidelines, the residual strength after alkali aging must be at least: 50% of the strength in the as-delivered state and at least 20 N/mm.

The tested scrims had a width of 50 mm and therefore the tensile strength after aging must be at least 1000 N / 50mm. These results show that the copolymer composition of the invention is suitable for producing scrims which fulfill the ETAG 04 norm. Results appear in Table 3.

**Table 3 -Tensile and Alkali Aging Results**

| Tensile strength at failure | Example 2-1 | Requirement | |
|---|---|---|---|
| As delivered (N/10 cm) | 2207 | >2000 | fulfilled |
| After alkali treatment (N/10 cm) | 1185 | >1000 | fulfilled |
| Ratio alkali / as delivered (%) | 54 | >50 | fulfilled |

While the invention has been described in connection with numerous examples and embodiments, modifications within the spirit and scope of the invention will be readily apparent to those of skill in the art. In view of the foregoing discussion, relevant knowledge in the art and references including copending applications discussed above in connection with the Background and Detailed Description, the disclosures of which are all incorporated herein by reference, further description is deemed unnecessary.

## Claims

1. A polymer composition comprising a copolymer obtainable by reacting:
a) 1-99 pphwm of vinyl acetate; and
b) 40-5 pphwm of at least one vinyl ester of neoalkanoic acid; and
c) at least one additional comonomer selected from the group comprising: (i) 40-1 pphwm of at least one α-olefin; (ii) 10-0.1 pphwm of at least one functional monomer; (iii) 40-1 pphwm of at least one ester of ethylenically unsaturated carboxylic acids; and optionally
d) other comonomers.
wherein said polymer is composed and synthesized so as to be useful in or as binders for fibrous substrates, such as woven or nonwoven products including textiles, apparel in general, papers, scrim, engineered fabrics, glass or other mineral fibers, roofing or flooring materials.

2. The polymer composition as claimed in Claim 1, wherein the copolymer is obtainable by reacting from 10-90 pphwm vinyl acetate.

3. The polymer composition as claimed in Claim 1, wherein the copolymer is obtainable by reacting from 30-8 pphwm of at least one vinyl ester of neoalkanoic acid.

4. The polymer composition as claimed in Claim 1, wherein the vinyl ester of neoalkanoic acid is of the structural formula: 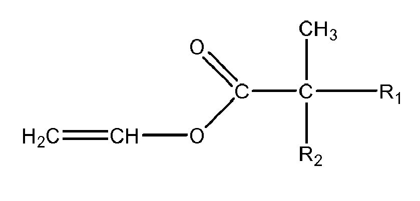 where R₁ and R₂ are alkyl groups which together may collectively contain from about 6-8 carbon atoms.

5. The polymer composition as claimed in Claim 4, wherein R₁ and R₂ collectively contain 7 carbon atoms.

6. The polymer composition as claimed in Claim 1, wherein the copolymer is obtainable by reacting from 25-10 pphwm of at least one α-olefin.

7. The polymer composition as claimed in Claim 6, wherein the α-olefin is ethylene.

8. The polymer composition composition as claimed in Claim 1, wherein the copolymer is obtainable by reacting from 8-2 pphwm of at least one functional monomer.

9. The polymer composition as claimed in Claim 8, wherein said functional monomer is a crosslinking monomer..

10. The polymer composition as claimed in Claim 9, wherein said crosslinking monomer is a self-crosslinking monomer.

11. The polymer composition as claimed in Claim 10, wherein said self-crosslinking monomer is N-methylolacrylamide.

12. The polymer composition as claimed in Claim 10, wherein the copolymer is obtainable by reacting from 8-0.5 pphwm of at least one self-crosslinking monomer.

13. The polymer composition as claimed in Claim 1, wherein the copolymer is obtainable by reacting from 25-10, pphwm of at least one α-olefin and 8-2 pphwm of at least one functional monomer.

14. The polymer composition as claimed in Claim 1, wherein the copolymer is obtainable by reacting from 20-5 pphwm of at least one ester of ethylenically unsaturated carboxylic acids and 8-2 pphwm of at least one functional monomer.

15. The polymer composition as claimed in Claim 14, wherein said ester of ethylenically unsaturated carboxylic acids is selected from (C₁-C₁₂) alkyl (meth)acrylates.

16. The polymer composition as claimed in Claim 1, grafted to a polyhydroxy polymer to form a graft copolymer.

17. A fibrous product including a fibrous substrate and applied thereto a polymeric binder composition comprising a copolymer obtainable by reacting:
a) 5-95 pphwm of vinyl acetate; and
b) 40-5 pphwm of vinyl esters of neoalkanoic acid,
c) 10-0.1 pphwm of self-crosslinking monomer; and optionally
d) an additional comonomer selected from the group comprising: (i) 40-1 pphwm of at least one α-olefin; and (ii) 40-1 pphwm of at least one alkyl (meth)acrylate.

18. The fibrous product as claimed in Claim 17, wherein the fibrous substrate is a paper substrate, textile fiber substrate, or polymeric scrim substrate.

19. The fibrous product as claimed in Claim 17, wherein the copolymer is obtainable by reacting from 35-5 pphwm ethylene.

20. The fibrous product as claimed in Claim 17, wherein the copolymer is obtainable by reacting from 8-0.5 pphwm of at least one self-crosslinking monomer.

21. The fibrous product as claimed in Claim 17, wherein the copolymer is obtainable by reacting from 20-5 pphwm of at least one alkyl (meth)acrylate.
